# EUROPÄISCHE PATENTSCHRIFT

(11) **EP 3 658 401 B1**
(45) Veröffentlichungstag und Bekanntmachung des Hinweises auf die Patenterteilung: **13.11.2024**
(21) Anmeldenummer: 18737851.8
(22) Anmeldetag: 29.06.2018
(51) Int. Cl.: B60K 6/405, B60K 6/54, B60L 50/13, B60L 50/16, H02K 5/00, H02K 7/00, H02K 9/19, H02K 11/33, B60K 6/40, B60K 6/48, B60K 1/00, B60K 17/08, B60K 6/547, B60L 15/00

(54) **GETRIEBE FÜR EIN KRAFTFAHRZEUG**
TRANSMISSION FOR A MOTOR VEHICLE
BOÎTE DE VITESSES POUR VÉHICULE À MOTEUR

(30) Priorität: 24.07.2017 DE 102017212677
(43) Veröffentlichungstag der Anmeldung: 03.06.2020
(73) Patentinhaber: ZF Friedrichshafen AG, 88046 Friedrichshafen (DE)
(72) Erfinder: ESCHENBECK, Linus, 88239 Wangen (DE); THURN, Hermann, 95488 Eckersdorf (DE); HELD, Matthias, 91289 Schnabelwaid (DE)
(74) Vertreter: ZF Friedrichshafen AG
(86) Internationale Anmeldenummer: PCT/EP2018/067579
(87) Internationale Veröffentlichungsnummer: WO 2019/020314

(56) Entgegenhaltungen:
- EP-A1- 3 112 197
- EP-A1- 3 112 197
- DE-A1- 102006 005 095
- DE-A1- 102015 101 024
- DE-T5- 112009 000 022
- DE-T5- 112009 000 057
- DE-T5- 112013 002 854
- DE-T5- 112013 002 854
- DE-T5- 112014 001 863
- DE-T5- 112014 001 863
- DE-T5- 112015 001 689
- DE-T5- 112015 001 689
- DE-T5- 112015 004 417
- DE-T5- 112015 004 417
- JP-A- 2014 069 755
- JP-A- 2014 069 755
- JP-A- 2014 113 915
- JP-A- 2015 220 830
- JP-A- 2015 220 830
- US-A1- 2009 243 443
- US-B2- 8 545 367
- US-B2- 9 441 725

## Beschreibung

Die Erfindung betrifft ein Getriebe für ein Kraftfahrzeug, sowie ein Kraftfahrzeug mit einem solchen Getriebe. Ein Getriebe bezeichnet hier insbesondere ein mehrgängiges Getriebe, bei dem eine Vielzahl von Gängen, also feste Übersetzungsverhältnisse zwischen einer Antriebswelle und einer Abtriebswelle des Getriebes, durch Schaltelemente vorzugsweise automatisch schaltbar sind. Bei den Schaltelementen handelt es sich hier beispielsweise um Kupplungen oder Bremsen. Derartige Getriebe finden vor allem in Kraftfahrzeugen Anwendung, um die Drehzahl- und Drehmomentabgabecharakteristik der Antriebseinheit den Fahrwiderständen des Fahrzeugs in geeigneter Weise anzupassen.

Die Offenlegung DE 10 2010 002 746 A1 der Anmelderin beschreibt ein solches Getriebe, welches eine innerhalb einer Getriebeglocke des Getriebegehäuses angeordnete elektrische Maschine aufweist. Die elektrische Maschine ist mit einer zugeordneten Leistungselektronik gekoppelt, wobei die Leistungselektronik in einer Deckelkonstruktion des Getriebegehäuses vorgesehen ist und über eine Phasenschnittstelle mit der elektrischen Maschine verbunden ist. Die Deckelkonstruktion ist im Bereich der Getriebeglocke radial unterhalb der elektrischen Maschine an dem Getriebegehäuse lösbar befestigt. Durch eine derartige Anbindung der Leistungselektronik wird die Bodenfreiheit eines Kraftfahrzeugs mit einem solchen Getriebe reduziert.

Die DE 11 2015 004 417 T5 beschreibt eine Fahrzeugantriebs-Vorrichtung, die eine elektrische Maschine und einen Wechselrichter aufweist. Der Wechselrichter ist auf einem Wechselrichter-Gehäuse angeordnet, welcher durch einen Gehäusedeckel verschlossen ist. Das Wechselrichter-Gehäuse ist mit einem Grundkörper-Gehäuse verbunden.

Die JP 2015-220830A beschreibt eine Anordnung einer Umrichtereinheit an einem Getriebe. Der Umrichter ist an einer Innenseite eines Umrichtergehäuses angeordnet, welcher mit dem Getriebegehäuse verbunden ist. Zwischen dem Umrichter und dem Getriebegehäuse ist ein Deckel angeordnet, welcher den Umrichter abdeckt.

Die DE 11 2009 000 022 T5 beschreibt eine Hybridantriebseinheit mit einem Hauptkörpergehäuse, das einen mit einer Bremskraftmaschine verbundenen Verbindungsbereich aufweist und in sich eine drehende Elektromaschine aufnimmt, und einem Wechselrichtergehäuse, das integral mit dem Hauptkörpergehäuse ausgebildet ist und in sich einen Wechselrichter aufnimmt, der die drehende Elektromaschine steuert.

Es ist daher Aufgabe der Erfindung das im Stand der Technik bekannte Getriebe derart weiterzuentwickeln, sodass das Getriebe eine kompakte Bauhöhe aufweist ohne die Außenabmessungen des Getriebes wesentlich zu vergrößern.

Die Aufgabe wird gelöst durch die Merkmale des Patentanspruchs 1. Vorteilhafte Ausgestaltungen ergeben sich aus den Unteransprüchen, der Beschreibung sowie aus den Figuren.

Das Getriebe weist ein Gehäuse, einen innerhalb des Gehäuses angeordneten Radsatz zur Bildung mehrerer Gänge zwischen einer Antriebswelle und einer Abtriebswelle des Getriebes, eine elektrische Maschine sowie ein Leistungselektronikmodul auf. Die elektrische Maschine ist mit der Antriebswelle, mit der Abtriebswelle oder mit einem Element des Radsatzes wirkverbunden.

Das Leistungselektronikmodul weist ein Trägerelement mit einer Innenseite und mit einer Außenseite, einen Gleichspannungsanschluss, einen Wechselrichter sowie einen Wechselspannungsanschluss auf. Der Wechselspannungsanschluss ist mit einer Phasenschnittstelle der elektrischen Maschine verbunden, bevorzugt lösbar verbunden.

Das Gehäuse weist an einer Außenwand einen Bereich zur Aufnahme des Leistungselektronikmoduls auf. Dieser Bereich ist durch das Trägerelement des Leistungselektronikmoduls verschließbar. Die Außenwand des Gehäuses und die Innenseite des Trägerelements bilden einen Trockenraum, in dem der Wechselrichter aufgenommen ist. Der Wechselrichter ist an dem Trägerelement befestigt. Der Bereich des Gehäuses, an dem das Leistungselektronikmodul aufgenommen ist, trennt zumindest abschnittsweise den Radsatz des Getriebes vom Trockenraum des Wechselrichters.

Durch das Zusammenwirken von Getriebegehäuse und Trägerelement des Leistungselektronikmoduls kann ein separates Gehäuse des Leistungselektronikmoduls entfallen. Durch die Ausbildung des Trockenraums im Bereich des Radsatzes kann der zur Verfügung stehende Bauraum besonders effizient genutzt werden. Denn der Radsatz weist häufig einen runden, oder zumindest abgerundeten Querschnitt auf, welcher kleiner ist als der Querschnitt der elektrischen Maschine. Durch Ausnutzung des Bauraums im Bereich des Radsatzes für das Leistungselektronikmodul vergrößert sich der gesamte Querschnitt des Getriebes daher nur geringfügig.

Die Leistungselektronikmodul ist seitlich am Getriebe angeordnet. Unter "seitlich" wird hierbei eine Anordnung verstanden, bei der die Leistungselektronik nicht oberhalb oder unterhalb des Getriebegehäuses angeordnet ist, sondern an einer Außenseite des Getriebegehäuses. Bei einem Getriebe für einen parallel zur Fahrtrichtung ausgerichteten Kraftfahrzeug-Antriebsstrang ist das Leistungselektronikmodul somit zu einer Fahrzeugseite hin ausgerichtet.

Gemäß einer bevorzugten Ausgestaltung weist das Getriebe eine Antriebswellenschnittstelle und eine Abtriebswellenschnittstelle auf. Über die Antriebswellenschnittstelle ist Leistung von einer getriebe-externen Antriebseinheit auf die Antriebswelle des Getriebes übertragbar, gegebenenfalls durch Schließen einer Trennkupplung oder einer Anfahrkupplung. Über die Abtriebswellenschnittstelle ist Leistung von der Abtriebswelle zu Antriebsrädern eines mit dem Getriebe ausgestatteten Kraftfahrzeugs übertragbar. Der Leistungspfad zwischen Abtriebswelle und Antriebsrädern kann ein oder mehrere Differentialgetriebe sowie weitere Antriebsstrangwellen umfassen. Die Antriebsschnittstelle und die Abtriebsschnittstelle sind an gegenüberliegenden Enden des Getriebes angeordnet. Das Leistungselektronikmodul ist zwischen der Antriebsschnittstelle und der Abtriebsschnittstelle angeordnet, und erstreckt sich zumindest abschnittsweise bis oberhalb des untersten Drittels der Bauhöhe des Getriebegehäuses. Unter "Bauhöhe" wird hierbei die vertikale Abmessung des Getriebegehäuses in der Einbaulage im Kraftfahrzeug verstanden.

Vorzugsweise befindet sich der Gehäusebereich zur Aufnahme des Leistungselektronikmoduls zwischen einer Unterkante des Getriebegehäuses und der halben Bauhöhe des Getriebegehäuses. Zumindest abschnittsweise erstreckt sich der Gehäusebereich oberhalb des untersten Drittels der Bauhöhe des Getriebegehäuses. Bei einer solchen Ausgestaltung kann zumindest ein Teil des Wechselspannungsanschlusses in jenem Abschnitt des Leistungselektronikmoduls angeordnet sein, welcher sich oberhalb des untersten Drittels der Bauhöhe des Getriebegehäuses erstreckt.

Vorzugsweise weist das Leistungselektronikmodul abschnittsweise eine geringere Bauhöhe als das Drittel der Bauhöhe des Getriebegehäuses auf. Bei einer solchen Ausgestaltung kann der Gleichspannungsanschluss in jenem Abschnitt des Leistungselektronikmoduls angeordnet sein, welcher eine geringere Bauhöhe als das Drittel der Bauhöhe des Getriebegehäuses aufweist.

Das Leistungselektronikmodul erstreckt sich zu einem überwiegenden Anteil entlang des untersten Drittels der Bauhöhe des Getriebegehäuses. In anderen Worten ist ein Großteil des Leistungselektronikmoduls entlang des untersten Drittels des Getriebegehäuses angeordnet. Dadurch wird ein Innenraum des Kraftfahrzeugs mit einem solchen Getriebe nicht verkleinert.

Vorzugsweise weist das Trägerelement Öffnungen auf, welche mittels einem oder mehreren Deckeln verschließbar sind. Durch die Öffnungen können Montage und/oder Wartungstätigkeiten am Getriebe ermöglicht werden, ohne das Leistungselektronikmodul vom Getriebe zu lösen. Beispielsweise kann der Wechselspannungsanschluss an der Innenseite des Trägerelements angeordnet sein, wobei der Wechselspannungsanschluss durch die Öffnungen hindurch ausgehend von einer Außenseite des Trägerelements zugänglich ist. Dies ermöglicht eine Kontaktierung des Wechselspannungsanschlusses mit der Phasenschnittstelle der elektrischen Maschine nach einer Befestigung des Leistungselektronikmoduls am Getriebegehäuse.

Gemäß einer bevorzugten Ausgestaltung ist der Gleichspannungsanschluss an der Außenseite des Trägerelements angeordnet. Dies erleichtert das Herstellen einer elektrisch leitenden Verbindung zwischen einer Batterie des Kraftfahrzeugs und dem Gleichspannungsanschluss bei der Montage des Getriebes in das Kraftfahrzeug.

Vorzugsweise weist das Leistungselektronikmodul einen Kühlwasser-Zufuhr-Anschluss und einen Kühlwasser-Abfuhr-Anschluss auf, welche an der Außenseite des Trägerelements angeordnet sind. Über den Kühlwasser-Zufuhr-Anschluss kann dem Leistungselektronikmodul Kühlwasser zugeführt werden, insbesondere zum Kühlen der Leistungshalbleiter des Wechselrichters. Über den Kühlwasser-Abfuhr-Anschluss kann das Kühlwasser aus dem Leistungselektronikmodul wieder herausgeführt werden.

Vorzugsweise weist das Leistungselektronikmodul einen Signalstecker auf, welcher an der Außenseite des Trägerelements angeordnet ist. Der Signalstecker ist zur Signalübertragung zwischen einem Element des Leistungselektronikmoduls und einer getriebe-externen Steuereinheit eingerichtet.

Durch Vorsehen der verschiedenen Schnittstellen des Leistungselektronikmoduls an dessen Trägerelement kann das Leistungselektronikmodul fertig geprüft und vormontiert am Getriebegehäuse befestigt werden.

Gemäß einer bevorzugten Ausgestaltung weist das Trägerelement ein Druckausgleichselement auf, mittels dem der Trockenraum mit der Umgebung verbunden ist. Dadurch kann ein Ansammeln von Feuchtigkeit im Trockenraum, hervorgerufen durch einen Druckunterschied zwischen Umgebung und Trockenraum, vermieden werden. Alternativ dazu kann das Trägerelement einen Anschluss für eine Entlüftungsleitung aufweisen, mittels dem der Trockenraum mit der Umgebung verbunden ist. Das freie Ende der Entlüftungsleitung kann an einem im Kraftfahrzeug, welches mit einem solchen Getriebe ausgestattet ist, hoch gelegenen und wassergeschützten Bereich angeordnet sein. Gemäß einer weiteren Alternative kann der Trockenraum über zumindest eine Bohrung im Gehäuse mit der Umgebung verbunden sein. Das freie Ende dieser Bohrung ist vorzugsweise an einem hoch gelegenen und wassergeschützten Bereich des Getriebes angeordnet. Die Entlüftung des Trockenraums erfolgt bei einer solchen Ausgestaltung über diese Bohrung.

Das Getriebe kann Bestandteil eines Kraftfahrzeugs sein. Das Kraftfahrzeug weist neben dem Getriebe auch einen Verbrennungsmotor auf, welche über einen Torsionsschwingungsdämpfer mit der Antriebswelle des Getriebes drehelastisch verbunden, bzw. verbindbar sein kann. Die Abtriebswelle des Getriebes ist mit einem getriebe-internen oder getriebe-externen Differentialgetriebe antriebswirkverbunden, welches mit Rädern des Kraftfahrzeugs wirkverbunden ist. Das Kraftfahrzeug mit dem Getriebe ermöglicht mehrere Antriebsmodi des Kraftfahrzeugs. In einem elektrischen Fahrbetrieb wird das Kraftfahrzeug von der elektrischen Maschine des Getriebes angetrieben. In einem verbrennungsmotorischen Betrieb wird das Kraftfahrzeug vom Verbrennungsmotor angetrieben. In einem hybridischen Betrieb wird das Kraftfahrzeug sowohl vom Verbrennungsmotor als auch von der elektrischen Maschine des Getriebes angetrieben.

Ausführungsbeispiele der Erfindung sind nachfolgend anhand der beigefügten Figuren detailliert beschrieben. Es zeigen:
Fig. 1 bis Fig.3 je eine schematische Ansicht eines Getriebes für ein Kraftfahrzeug;
Fig. 4 eine Seitenansicht eines erfindungsgemäßen Getriebes mit demontiertem Leistungselektronikmodul;
Fig. 5 eine Schnittansicht des erfindungsgemäßen Getriebes mit montiertem Leistungselektronikmodul;
Fig. 6 eine Seitenansicht des erfindungsgemäßen Getriebes mit montiertem Leistungselektronikmodul;
Fig. 7 eine Seitenansicht einer Variante des erfindungsgemäßen Getriebes mit montiertem Leistungselektronikmodul; und
Fig. 8 eine schematische Ansicht eines Kraftfahrzeugs mit dem erfindungsgemäßen Getriebe.

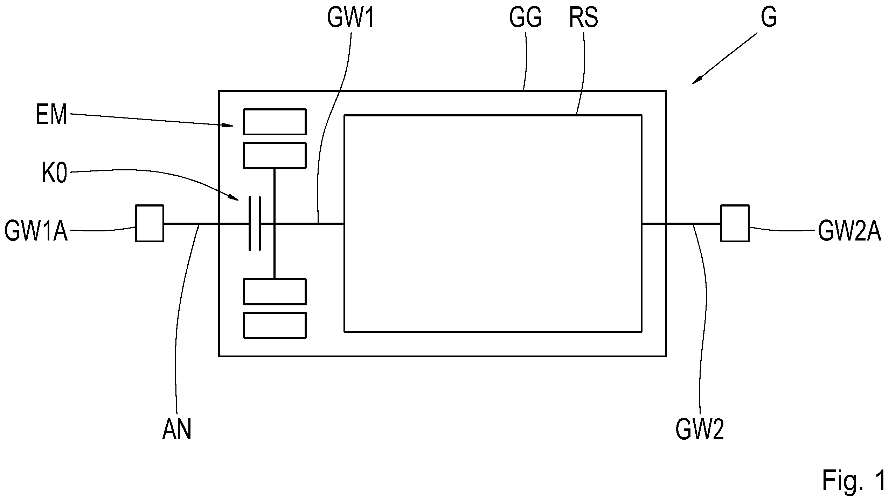

Fig. 1 zeigt eine schematische Ansicht eines Getriebes G für ein Kraftfahrzeug. Das Getriebe G weist ein Gehäuse GG, einen innerhalb des Gehäuses GG angeordneten Radsatz RS sowie eine Antriebswelle GW1 und eine Abtriebswelle GW2 auf. Der Radsatz RS dient zur Bildung mehrerer Gänge zwischen der Antriebswelle GW1 und der Abtriebswelle GW2. Das Getriebe G weist ferner eine elektrische Maschine EM auf, deren Rotor mit der Antriebswelle GW1 wirkverbunden ist. Die Antriebswelle GW1 ist über eine Kupplung K0 mit einer Anschlusswelle AN des Getriebes G verbunden. An der Anschlusswelle AN ist eine Antriebsschnittstelle GW1A ausgebildet. An der Abtriebswelle GW2 ist eine Abtriebsschnittstelle GW2A ausgebildet. Antriebsschnittstelle GW1A und Abtriebsschnittstelle GW2A sind an gegenüberliegenden Enden des Getriebes G angeordnet. Das Gehäuse GG umschließt neben dem Radsatz RS auch die Trennkupplung K0 und die elektrische Maschine EM.

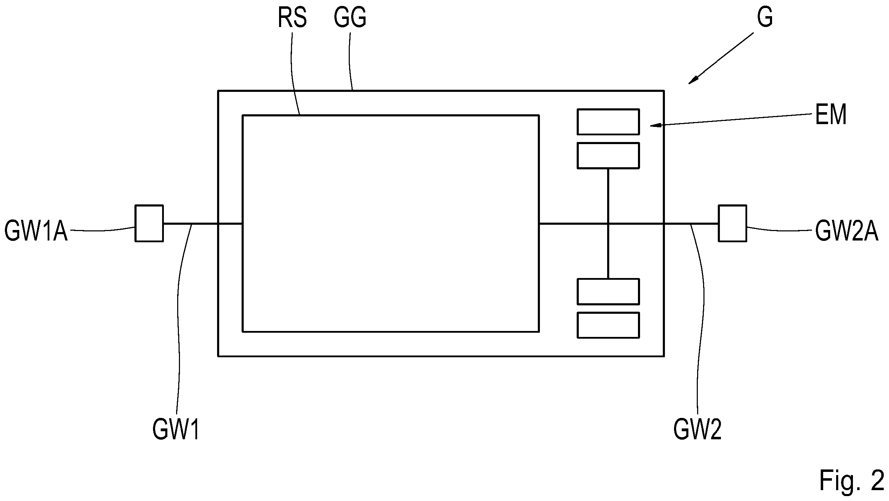

Fig. 2 zeigt eine schematische Ansicht eines Getriebes G, welches im Wesentlichen dem in Fig.1 dargestellten Getriebe G entspricht. Der Rotor der elektrischen Maschine EM ist nun mit Abtriebswelle GW2 wirkverbunden. Die Anschlusswelle AN und die Trennkupplung K0 entfallen, sodass die Antriebsschnittstelle GW1A an der Antriebswelle GW1 ausgebildet ist.

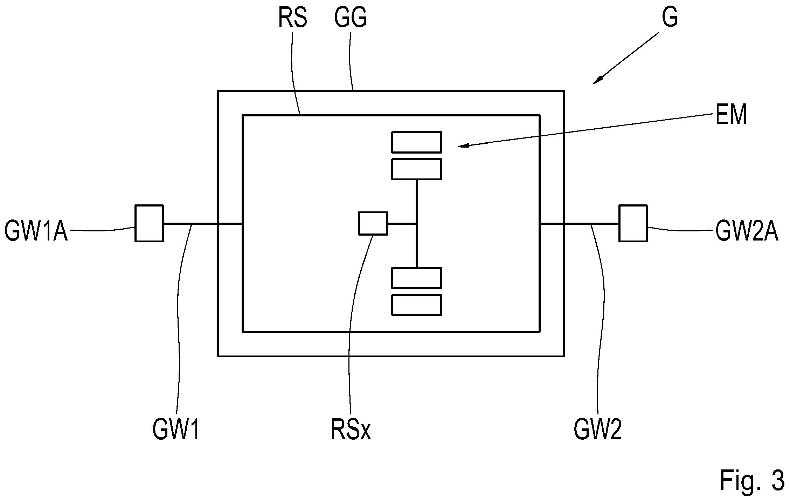

Fig. 3 zeigt eine schematische Ansicht eines Getriebes G, welches im Wesentlichen dem in Fig.1 dargestellten Getriebe G entspricht. Der Rotor der elektrischen Maschine EM ist nun einem Element RSx des Radsatzes RS wirkverbunden. Die Anschlusswelle AN und die Trennkupplung K0 entfallen, sodass die Antriebsschnittstelle GW1A an der Antriebswelle GW1 ausgebildet ist.

Die in Fig. 1 bis Fig. 3 dargestellten Getriebe G sind lediglich beispielhaft anzusehen. So könnte bei Ausführungen gemäß Fig. 2 und Fig. 3 ebenso eine Trennkupplung K0 und eine Anschlusswelle AN vorgesehen sein. Jedes der beispielhaft gezeigten Getriebe könnte einen Drehmomentwandler aufweisen, welcher zwischen der Anschlusswelle AN und dem Radsatz RS angeordnet ist.

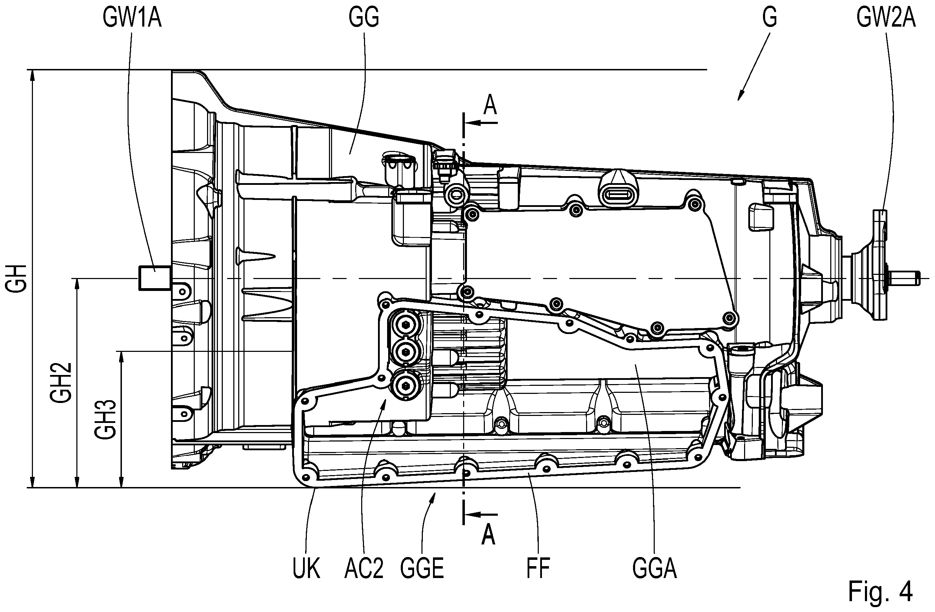

Fig. 4 zeigt eine Seitenansicht eines Getriebes G. Der Aufbau des Getriebes G kann beispielhaft einem der in Fig. 1 bis Fig. 3 dargestellten Ausführungen entsprechen. Das Getriebe G weist jedenfalls eine elektrische Maschine EM auf, welche im Inneren des Gehäuses GG angeordnet, und daher in Fig. 4 nicht sichtbar ist. Das Gehäuse GG weist an einer Außenwand GGA einen Bereich GGE auf, welcher mittels eines in Fig. 4 nicht dargestellten Leistungselektronikmoduls LE verschließbar ist. Der Bereich GGE wird durch eine Flanschfläche FF begrenzt, welche die mechanische Schnittstelle zwischen dem Gehäuse GG und dem Leistungselektronikmodul LE bildet. Im Bereich GGE ist eine Phasenschnittstelle AC2 angeordnet, welche der innerhalb des Gehäuses GG angeordneten elektrischen Maschine EM zugeordnet ist.

Der Bereich GGE befindet sich zwischen einer Unterkante UK des Getriebegehäuses GG und der halben Bauhöhe GH2 des Getriebegehäuses GG. Abschnittsweise erstreckt sich der Bereich GGE oberhalb des untersten Drittels GH3 der Bauhöhe GH des Getriebegehäuses GG. Die Phasenschnittstelle AC2 befindet sich teilweise in einem Abschnitt des Bereichs GGE, welcher sich oberhalb des untersten Drittels GH3 der Bauhöhe GH des Getriebegehäuses GG erstreckt.

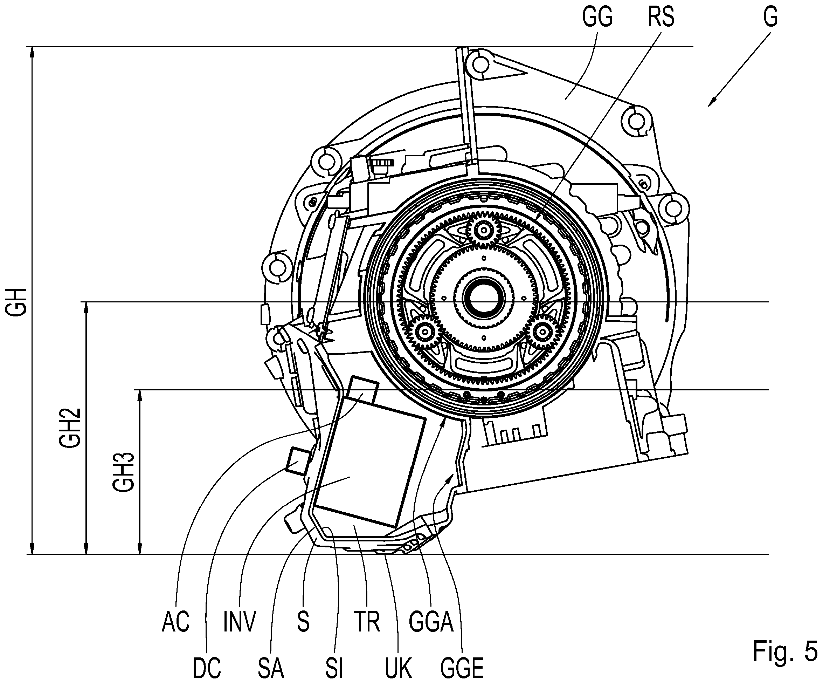

Fig. 5 zeigt eine Schnittansicht des erfindungsgemäßen Getriebes G, wobei das Leistungselektronikmodul LE am Getriebegehäuse GG montiert ist. Die in Fig. 4 angegebene Schnittebene A verläuft durch den Radsatz RS hindurch, sodass der Radsatz RS in Fig. 5 teilweise sichtbar ist. Das Leistungselektronikmodul LE weist ein Trägerelement S mit einer Innenseite SI und mit einer Außenseite SA, einen Gleichspannungsanschluss DC, einen Wechselrichter INV sowie einen mit der Phasenschnittstelle AC2 verbundenen Wechselspannungsanschluss AC auf. Der Wechselrichter INV ist an der Innenseite SI des Trägerelement S befestigt. Der Bereich GGE des Gehäuses GG und die Innenseite SI des Trägerelements S bilden einen Trockenraum TR zur Aufnahme des Wechselrichters INV. In der Schnittebene A trennt den Bereich GGE des Gehäuse GG den Radsatz RS vom Trockenraum TR,

Der Wechselspannungsanschluss AC ist innerhalb des Trockenraums TR angeordnet, und in der gegebenen Schnittansicht nur teilweise sichtbar. Ein Abschnitt des Wechselspannungsanschlusses AC befindet sich oberhalb des untersten Drittels GH3 der Bauhöhe GH des Getriebegehäuses GG. Der Gleichspannungsanschluss DC ist an der Außenseite SA des Trägerelements S angeordnet und befindet innerhalb des untersten Drittels GH3 der Bauhöhe GH des Getriebegehäuses GG.

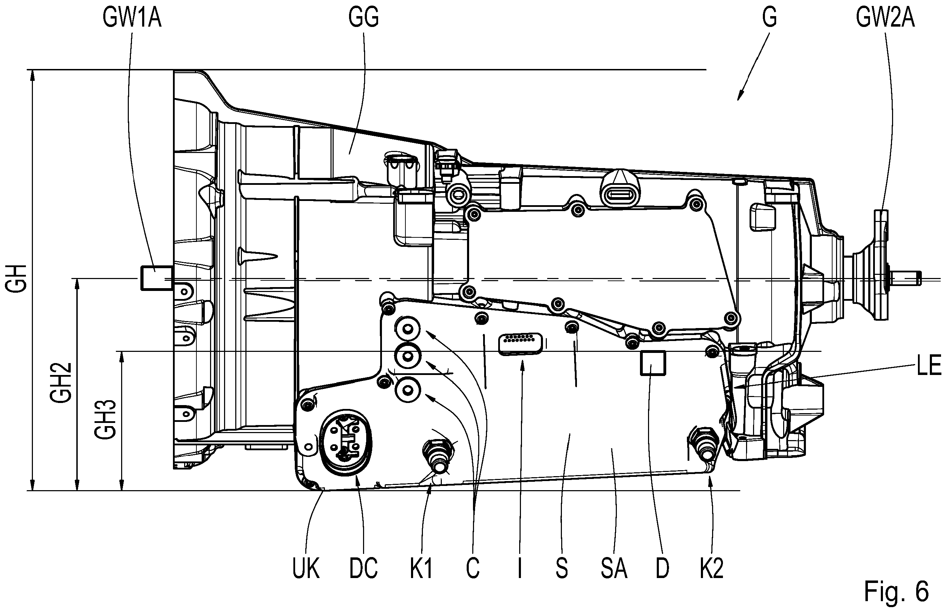

Fig. 6 zeigt eine Seitenansicht des erfindungsgemäßen Getriebes G, wobei im Unterschied zur Darstellung in Fig. 4 das Leistungselektronikmodul LE am Gehäuse GG montiert ist. Darin ist gut zu erkennen, dass sich das Leistungselektronikmodul LE zu einem überwiegenden Anteil entlang des untersten Drittels GH3 der Bauhöhe GH des Getriebegehäuses GG erstreckt. Das Trägerelement S weist mehrere Öffnungen auf, welche mittels Deckeln C verschlossen sind. Werden die Deckel C entfernt, so ist der an der Innenseite SI des Trägerelements S angeordnete Wechselspannungsanschluss AC von der Außenseite SA zugänglich.

Das Leistungselektronikmodul LE weist einen Kühlwasser-Zufuhr-Anschluss K1 und einen Kühlwasser-Abfuhr-Anschluss K2 auf, welche an der Außenseite SA des Trägerelements S angeordnet sind. Über den Kühlwasser-Zufuhr-Anschluss K1 kann einem Wärmetauscher des Leistungselektronikmoduls LE Kühlwasser zugeführt werden. Der Wärmetauscher ist in thermischem Kontakt mit Leistungshalbleitern des Wechselrichters INV, sodass die Leistungshalbleiter an den Wärmetauscher Wärmeenergie abgeben können. Im Wärmetauscher erwärmt sich das zugeführte Kühlwasser, welches über den Kühlwasser-Abfuhr-Anschluss K2 aus dem Leistungselektronikmodul LE herausgeleitet wird. Das derart erwärmte Kühlwasser kann einem bevorzugt getriebe-externen weiteren Wärmetauscher zugeführt werden.

Das Leistungselektronikmodul LE weist an der Außenseite SA des Trägerelements S einen Signalstecker I auf. Der Signalstecker I ist zur Signalübertragung zwischen einem Element des Leistungselektronikmoduls LE, insbesondere einer Steuerung des Wechselrichters INV, und einer in Fig. 6 nicht dargestellten getriebe-externen Steuereinheit ECU eingerichtet. Das Leistungselektronikmodul LE weist ferner ein Druckausgleichselement D auf, mittels dem der Trockenraum TR mit der Umgebung verbunden ist. Dadurch kann ein Ansammeln von Feuchtigkeit im Trockenraum TR, hervorgerufen durch einen Druckunterschied zwischen Umgebung und Trockenraum TR, vermieden werden.

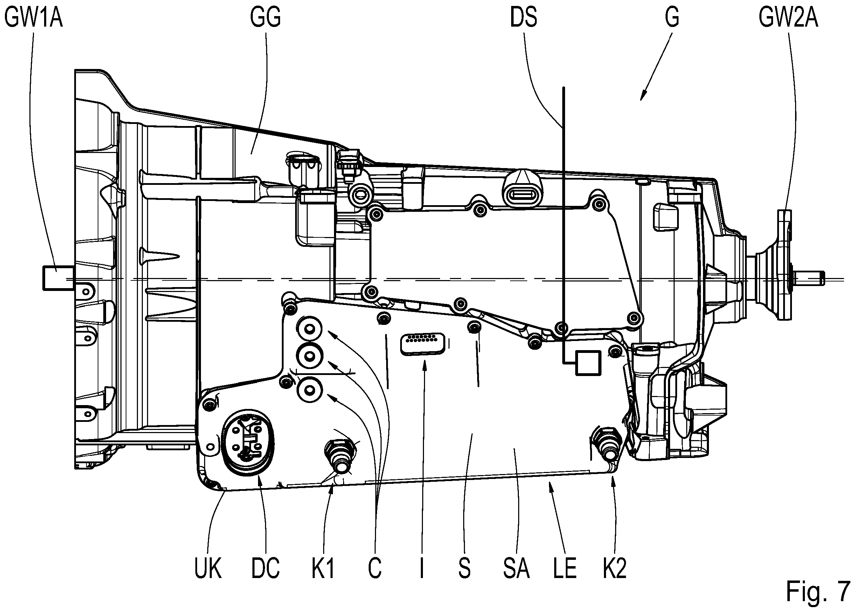

Fig. 7 zeigt eine Seitenansicht einer Variante des erfindungsgemäßen Getriebes G, welches im Wesentlichen dem in Fig. 6 dargestellten Getriebe G entspricht. Anstatt dem Druckausgleichselement D weist das Trägerelement S nun einen Anschluss für eine Entlüftungsleitung DS auf. Mittels der Entlüftungsleitung DS ist der Trockenraum TR mit der Umgebung verbunden. Das freie Ende der Entlüftungsleitung DS kann an einem im Kraftfahrzeug, welches mit einem solchen Getriebe G ausgestattet ist, hoch gelegenen und wassergeschützten Bereich angeordnet sein.

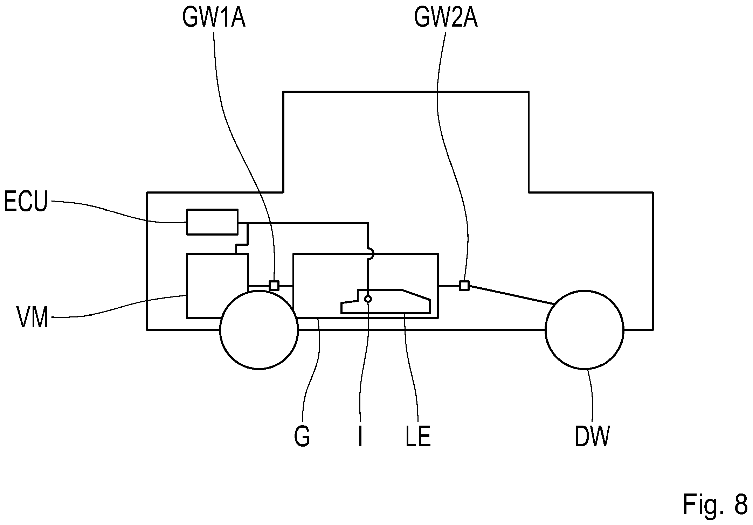

Fig. 8 zeigt eine schematische Ansicht eines Kraftfahrzeugs mit dem erfindungsgemäßen Getriebe G. Das Getriebe G ist über die Antriebsschnittstelle GW1A mit einem Verbrennungsmotor VM verbunden. Über die Abtriebsschnittstelle GW2A ist das Getriebe G mit einem nicht dargestellten Differentialgetriebe verbunden, über welches die an der Abtriebswelle GW2 anliegende Leistung auf Antriebsräder DW des Kraftfahrzeugs verteilt wird.

Das Kraftfahrzeug weist eine Steuereinheit ECU auf, welche zur Steuerung von Hybridantriebsfunktionen des Kraftfahrzeugs eingerichtet ist. Die Steuereinheit ECU ist dazu mit dem Verbrennungsmotor VM und über den Signalstecker I mit dem Leistungselektronikmodul LE des Getriebes G zur Signalübertragung verbunden. Die Steuereinheit ECU kann mit weiteren Komponenten des Kraftfahrzeugs verbunden sein, beispielsweise mit einer Batterie.

### Bezugszeichen

- G: Getriebe
- GW1: Antriebswelle
- GW2: Abtriebswelle
- GW1A: Antriebsschnittstelle
- GW2A: Abtriebsschnittstelle
- RS: Radsatz
- RSx: Radsatzelement
- EM: Elektrische Maschine
- AC2: Phasenschnittstelle der elektrischen Maschine
- GG: Gehäuse
- GGE: Bereich des Gehäuses
- GGA: Außenwand des Gehäuses
- FF: Flanschfläche
- UK: Unterkante des Gehäuses
- GH: Bauhöhe des Gehäuses
- GH2: Halbe Bauhöhe des Gehäuses
- GH3: Drittel der Bauhöhe des Gehäuses
- LE: Leistungselektronikmodul
- S: Trägerelement
- SI: Innenseite des Trägerelements
- SA: Außenseite des Trägerelements
- DC: Gleichspannungsanschluss
- AC: Wechselspannungsanschluss
- INV: Wechselrichter
- A: Schnittebene
- TR: Trockenraum
- C: Deckel
- K1: Kühlwasser-Zufuhr-Anschluss
- K2: Kühlwasser-Abfuhr-Anschluss
- I: Signalstecker
- ECU: Steuereinheit
- D: Druckausgleichselement
- DS: Entlüftungsleitung
- VM: Verbrennungsmotor
- K0: Trennkupplung
- AN: Anschlusswelle
- DW: Antriebsrad

## Patentansprüche

1. Getriebe (G) für ein Kraftfahrzeug, wobei das Getriebe (G) ein Gehäuse (GG), einen innerhalb des Gehäuses (GG) angeordneten Radsatz (RS) zur Bildung mehrerer Gänge zwischen einer Antriebswelle (GW1) und einer Abtriebswelle (GW2) des Getriebes (G), eine mit der Antriebswelle (GW1), der Abtriebswelle (GW2) oder einem Element (RSx) des Radsatzes (RS) wirkverbundene elektrische Maschine (EM) sowie ein Leistungselektronikmodul (LE) aufweist,
- wobei das Leistungselektronikmodul (LE) ein Trägerelement (S) mit einer Innenseite (SI) und mit einer Außenseite (SA), einen Gleichspannungsanschluss (DC), einen Wechselrichter (INV) sowie einen mit einer Phasenschnittstelle (AC2) der elektrischen Maschine (EM) verbundenen Wechselspannungsanschluss (AC) aufweist,
- wobei das Gehäuse (GG) an einer Außenwand (GGA) einen Bereich (GGE) zur Aufnahme des Leistungselektronikmoduls (LE) aufweist, welcher durch das Trägerelement (S) des Leistungselektronikmoduls (LE) verschließbar ist,
- wobei der Bereich (GGE) des Gehäuses (GG) und die Innenseite (SI) des Trägerelements (S) einen Trockenraum (TR) zur Aufnahme des Wechselrichters (INV) bilden, welcher an dem Trägerelement (S) befestigt ist, und
- wobei der Bereich (GGE) des Gehäuses (GG) zumindest abschnittsweise den Radsatz (RS) vom Trockenraum (TR) trennt,
- wobei das Leistungselektronikmodul (LE) seitlich am Gehäuse (GG) angeordnet ist, und sich zu einem überwiegenden Anteil entlang eines untersten Drittels (GH3) einer Bauhöhe (GH) des Gehäuses (GG) erstreckt.

2. Getriebe (G) nach Anspruch 1, **dadurch gekennzeichnet, dass** das Getriebe (G) eine Antriebsschnittstelle (GW1A) und eine Abtriebsschnittstelle (GW2A) aufweist, wobei die Antriebsschnittstelle (GW1A) und die Abtriebsschnittstelle (GW2A) an gegenüberliegenden Enden des Getriebes (G) angeordnet sind, wobei das Leistungselektronikmodul (LE) zwischen der Antriebsschnittstelle (GW1A) und
der Abtriebsschnittstelle (GW2A) angeordnet ist und sich zumindest abschnittsweise bis oberhalb des untersten Drittels (GH3) der Bauhöhe (GH) des Gehäuses (GG) erstreckt.

3. Getriebe (G) nach Anspruch 1 oder Anspruch 2, **dadurch gekennzeichnet, dass** sich der Bereich (GGE) zur Aufnahme des Leistungselektronikmoduls (LE) zwischen einer Unterkante (UK) des Gehäuses (GG) und einer halben Bauhöhe (GH2) des Gehäuses (GG) befindet, wobei sich der Bereich (GGE) zumindest abschnittsweise oberhalb des untersten Drittels (GH3) der Bauhöhe (GH) des Gehäuses (GG) erstreckt.

4. Getriebe (G) nach Anspruch 3, **dadurch gekennzeichnet, dass** zumindest ein Teil des Wechselspannungsanschlusses (AC) in jenem Abschnitt des Leistungselektronikmoduls (LE) angeordnet ist, welcher sich oberhalb des untersten Drittels (GH3) der Bauhöhe (GH) des Gehäuses (GG) erstreckt.

5. Getriebe (G) nach Anspruch 3 oder Anspruch 4, **dadurch gekennzeichnet, dass** das Leistungselektronikmodul (LE) abschnittsweise eine geringere Bauhöhe aufweist als das Drittel (GH3) der Bauhöhe (GH) des Gehäuses (GG).

6. Getriebe (G) nach Anspruch 5, **dadurch gekennzeichnet, dass** der Gleichspannungsanschluss (DC) in jenem Abschnitt des Leistungselektronikmoduls (LE) angeordnet ist, welcher eine geringere Bauhöhe (LEH) aufweist als das Drittel (GH3) der Bauhöhe (GH) des Gehäuses (GG).

7. Getriebe (G) nach einem der vorangehenden Ansprüche, **dadurch gekennzeichnet, dass** das Trägerelement (S) Öffnungen aufweist, welche mittels einem oder mehreren Deckeln (C) verschließbar sind.

8. Getriebe (G) nach Anspruch 7, **dadurch gekennzeichnet, dass** der Wechselspannungsanschluss (AC) an der Innenseite (SI) des Trägerelements (S) angeordnet ist, und ausgehend von einer Außenseite (SA) des Trägerelements (S) durch die Öffnungen zugänglich ist.

9. Getriebe (G) nach einem der vorangehenden Ansprüche, **dadurch gekennzeichnet, dass** der Gleichspannungsanschluss (DC) an der Außenseite (SA) des Trägerelements (S) angeordnet ist.

10. Getriebe (G) nach einem der vorangehenden Ansprüche, **dadurch gekennzeichnet, dass** das Leistungselektronikmodul (LE) einen Kühlwasser-Zufuhr-Anschluss (K1) und einen Kühlwasser-Abfuhr-Anschluss (K2) aufweist, welche an der Außenseite (SA) des Trägerelements (S) angeordnet sind.

11. Getriebe (G) nach einem der vorangehenden Ansprüche, **dadurch gekennzeichnet, dass** das Leistungselektronikmodul (LE) an der Außenseite (SA) des Trägerelements (S) einen Signalstecker (I) aufweist, der zur Signalübertragung zwischen einem Element des Leistungselektronikmoduls (LE) und einer getriebe-externen Steuereinheit (ECU) eingerichtet ist.

12. Getriebe (G) nach einem der vorangehenden Ansprüche, **dadurch gekennzeichnet, dass** das Trägerelement (S) ein Druckausgleichselement (D) aufweist, mittels dem der Trockenraum (TR) mit der Umgebung verbunden ist.

13. Getriebe (G) nach einem der Ansprüche 1 bis 11, **dadurch gekennzeichnet, dass** das Trägerelement (S) einen Anschluss für eine Entlüftungsleitung (DS) aufweist.

14. Getriebe (G) nach einem der Ansprüche 1 bis 11, **dadurch gekennzeichnet, dass** der Trockenraum (TR) über zumindest eine Bohrung im Gehäuse (GG) mit der Umgebung verbunden ist.

15. Kraftfahrzeug mit einem Getriebe (G) nach zumindest einem der Ansprüche 1 bis 14.

## Claims

1. Transmission (G) for a motor vehicle, wherein the transmission (G) has a housing (GG), has a gear set (RS) arranged within the housing (GG) and serving for forming multiple gears between a drive shaft (GW1) and an output shaft (GW2) of the transmission (G), has an electric machine (EM) which is connected operatively to the drive shaft (GW1), the output shaft (GW2) or an element (RSx) of the gear set (RS), and has a power-electronics module (LE),
- wherein the power-electronics module (LE) has a carrier element (S) with an inner side (SI) and outer side (SA), has a DC-voltage connection (DC), has an inverter (INV), and has an AC-voltage connection (AC) connected to the phase interface (AC2) of the electric machine (EM),
- wherein, on an outer wall (GGA), the housing (GG) has a region (GGE) for receiving the power-electronics module (LE), which region is able to be closed off by the carrier element (S) of the power-electronics module (LE),
- wherein the region (GGE) of the housing (GG) and the inner side (SI) of the carrier element (S) form a dry space (TR) for receiving the inverter (INV), which is fastened to the carrier element (S), and
- wherein the region (GGE) of the housing (GG) at least sectionally separates the gear set (RS) from the dry space (TR),
- wherein the power-electronics module (LE) is arranged laterally on the housing (GG) and extends predominantly along a lowermost third (GH3) of a construction height (GH) of the housing (GG).

2. Transmission (G) according to Claim 1, **characterized in that** the transmission (G) has a drive interface (GW1A) and an output interface (GW2A), wherein the drive interface (GW1A) and the output interface (GW2A) are arranged on opposite ends of the transmission (G), wherein the power-electronics module (LE) is arranged between the drive interface (GW1A) and the output interface (GW2A) and at least sectionally extends to above the lowermost third (GH3) of the construction height (GH) of the housing (GG) .

3. Transmission (G) according to Claim 1 or Claim 2, **characterized in that** the region (GGE) for receiving the power-electronics module (LE) is situated between a bottom edge (UK) of the housing (GG) and a point at half the construction height (GH2) of the housing (GG), wherein the region (GGE) at least sectionally extends above the lowermost third (GH3) of the construction height (GH) of the housing (GG).

4. Transmission (G) according to Claim 3, **characterized in that** at least a portion of the AC-voltage connection (AC) is arranged **in that** section of the power-electronics module (LE) which extends above the lowermost third (GH3) of the construction height (GH) of the housing (GG).

5. Transmission (G) according to Claim 3 or Claim 4, **characterized in that** the power-electronics module (LE) sectionally has a smaller construction height than the third (GH3) of the construction height (GH) of the housing (GG).

6. Transmission (G) according to Claim 5, **characterized in that** the DC-voltage connection (DC) is arranged in that section of the power-electronics module (LE) which has a smaller construction height (LEH) than the third (GH3) of the construction height (GH) of the housing (GG).

7. Transmission (G) according to one of the preceding claims, **characterized in that** the carrier element (S) has openings which are able to be closed off by means of one or more covers (C).

8. Transmission (G) according to Claim 7, **characterized in that** the AC-voltage connection (AC) is arranged on the inner side (SI) of the carrier element (S) and is accessible from an outer side (SA) of the carrier element (S) through the openings.

9. Transmission (G) according to one of the preceding claims, **characterized in that** the DC-voltage connection (DC) is arranged on the outer side (SA) of the carrier element (S).

10. Transmission (G) according to one of the preceding claims, **characterized in that** the power-electronics module (LE) has a cooling-water-supply connection (K1) and a cooling-water-discharge connection (K2) which are arranged on the outer side (SA) of the carrier element (S).

11. Transmission (G) according to one of the preceding claims, **characterized in that**, on the outer side (SA) of the carrier element (S), the power-electronics module (LE) has a signal connector (I) which is configured for transmission of signals between an element of the power-electronics module (LE) and a control unit (ECU) which is external to the transmission.

12. Transmission (G) according to one of the preceding claims, **characterized in that** the carrier element (S) has a pressure-equalization element (D) by means of which the dry space (TR) is connected to the surroundings.

13. Transmission (G) according to one of Claims 1 to 11, **characterized in that** the carrier element (S) has a connection for a venting line (DS).

14. Transmission (G) according to one of Claims 1 to 11, **characterized in that** the dry space (TR) is connected to the surroundings via at least one bore in the housing (GG).

15. Motor vehicle having a transmission (G) according to at least one of Claims 1 to 14.

## Revendications

1. Boîte de vitesses (G) pour un véhicule automobile, la boîte de vitesses (G) présentant un boîtier (GG), un jeu d'engrenages (RS) disposé à l'intérieur du boîtier (GG) pour former plusieurs rapports entre un arbre d'entrée (GW1) et un arbre de sortie (GW2) de la boîte de vitesses (G), une machine électrique (EM) en liaison active avec l'arbre d'entrée (GW1), l'arbre de sortie (GW2) ou un élément (RSx) du jeu d'engrenages (RS) ainsi qu'un module électronique de puissance (LE),
- le module électronique de puissance (LE) présentant un élément de support (S) avec un côté intérieur (SI) et avec un côté extérieur (SA), une connexion de tension continue (DC), un onduleur (INV) ainsi qu'une connexion de tension alternative (AC) reliée à une interface de phase (AC2) de la machine électrique (EM),
- le boîtier (GG) présentant sur une paroi extérieure (GGA) une zone (GGE) destinée à recevoir le module électronique de puissance (LE), qui est apte à être fermée par l'élément support (S) du module électronique de puissance (LE),
- la zone (GGE) du boîtier (GG) et la face intérieure (SI) de l'élément support (S) formant un espace sec (TR) destiné à recevoir l'onduleur (INV), qui est fixé à l'élément de support (S), et
- la zone (GGE) du boîtier (GG) séparant au moins par sections le jeu d'engrenages (RS) de l'espace de séchage (TR),
- le module électronique de puissance (LE) étant disposé latéralement sur le boîtier (GG), et s'étendant pour une part prépondérante le long d'un tiers inférieur (GH3) d'une hauteur de construction (GH) du boîtier (GG).

2. Boîte de vitesses (G) selon la revendication 1, **caractérisé en ce que** la boîte de vitesses (G) comprend une interface d'entrée (GW1A) et une interface de sortie (GW2A), l'interface d'entrée (GW1A) et l'interface de sortie (GW2A) étant situées à des extrémités opposées de la boîte de vitesses (G), le module électronique de puissance (LE) étant disposé entre l'interface d'entrée (GW1A) et l'interface de sortie (GW2A) et s'étendant au moins partiellement jusqu'au-dessus du tiers inférieur (GH3) de la hauteur de construction (GH) du boîtier (GG).

3. Boîte de vitesses (G) selon la revendication 1 ou la revendication 2, **caractérisée en ce que** la zone (GGE) de réception du module électronique de puissance (LE) est située entre un bord inférieur (UK) du boîtier (GG) et une demi-hauteur (GH2) du boîtier (GG), la zone (GGE) s'étendant au moins partiellement au-dessus du tiers inférieur (GH3) de la hauteur (GH) du boîtier (GG).

4. Boîte de vitesses (G) selon la revendication 3, **caractérisée en ce qu'**au moins une partie de la connexion de tension alternative (AC) est disposée dans la section du module électronique de puissance (LE) qui s'étend au-dessus du tiers le plus bas (GH3) de la hauteur de construction (GH) du boîtier (GG).

5. Boîte de vitesses (G) selon la revendication 3 ou la revendication 4, **caractérisée en ce que** le module électronique de puissance (LE) présente partiellement une hauteur inférieure au tiers (GH3) de la hauteur (GH) du boîtier (GG).

6. Boîte de vitesses (G) selon la revendication 5, **caractérisée en ce que** la connexion de tension continue (DC) est disposée dans la section du module électronique de puissance (LE) qui présente une hauteur de construction (LEH) inférieure au tiers (GH3) de la hauteur de construction (GH) du boîtier (GG).

7. Boîte de vitesses (G) selon l'une des revendications précédentes, **caractérisée en ce que** l'élément de support (S) présente des ouvertures qui peuvent être fermées au moyen d'un ou de plusieurs couvercles (C).

8. Boîte de vitesses (G) selon la revendication 7, **caractérisée en ce que** la borne de tension alternative (AC) est disposée sur la face interne (SI) de l'élément de support (S), et est accessible à partir d'une face externe (SA) de l'élément de support (S) à travers les ouvertures.

9. Boîte de vitesses (G) selon l'une des revendications précédentes, **caractérisée en ce que** la connexion de tension continue (DC) est disposée sur la face extérieure (SA) de l'élément de support (S).

10. Boîte de vitesses (G) selon l'une des revendications précédentes, **caractérisée en ce que** le module électronique de puissance (LE) comporte un raccord d'alimentation en eau de refroidissement (K1) et un raccord d'évacuation d'eau de refroidissement (K2) disposés sur la face extérieure (SA) de l'élément de support (S).

11. Boite de vitesses (G) selon l'une des revendications précédentes, **caractérisée en ce que** le module électronique de puissance (LE) comporte, sur la face extérieure (SA) de l'élément de support (S), un connecteur de signal (I) qui est agencé pour la transmission de signaux entre un élément du module électronique de puissance (LE) et une unité de commande (ECU) externe à la boîte de vitesses.

12. Boite de vitesses (G) selon l'une des revendications précédentes, **caractérisée en ce que** l'élément de support (S) présente un élément de compensation de pression (D) au moyen duquel l'espace sec (TR) est relié à l'environnement.

13. Boîte de vitesses (G) selon l'une des revendications 1 à 11, **caractérisée en ce que** l'élément de support (S) présente un raccordement pour une conduite de ventilation (DS) .

14. Boîte de vitesses (G) selon l'une des revendications 1 à 11, **caractérisée en ce que** l'espace sec (TR) est relié à l'environnement par au moins un alésage dans le boîtier (GG).

15. Véhicule automobile comportant une boîte de vitesses (G) selon au moins l'une des revendications 1 à 14.
